# EUROPEAN PATENT SPECIFICATION

(11) **EP 2 263 445 B1**
(45) Date of publication and mention of the grant of the patent: **14.11.2018**
(21) Application number: 10166324.3
(22) Date of filing: 17.06.2010
(51) Int. Cl.: A01G 9/02

(54) **Group of flowerpots**
Blumentopfgruppe
Groupe de pots de fleurs

(30) Priority: 17.06.2009 NL 2003034
(43) Date of publication of application: 22.12.2010
(73) Proprietor: Patentstar BV, 2771 NM Boskoop (NL)
(72) Inventor: Van der Starre, Huibert, 2742 KV Waddinxveen (NL)
(74) Representative: De Vries & Metman

(56) References cited:
- EP-A1- 0 228 496
- DE-A1- 3 406 136
- DE-U1- 8 803 849
- FR-A- 1 164 888
- FR-A1- 2 428 786
- GB-A- 2 127 872
- KR-A- 20060 110 080
- US-A- 3 683 549
- US-S1- D 297 822

## Description

The present invention relates to a group of flowerpots which are arranged in a compact manner on a rectangle.

In counters of downwardly tapering flowerpots, the cross-sectional shape of the upper edge determines the number of flowerpots of this type which can be placed on a specific surface. That surface may be a transport surface such as the surface of a Euro container or of what is known as a Danish trolley. A Danish trolley can be used in nurseries and at auctions during the transportation of flowerpots to the place of sale. Further surfaces which are important are the shelf surface on which the flowerpots are offered to the consumer (end customer) for sale, the cultivation bed in which the plants are cultivated and display tables.

It is known in the art to form the upper surface of a flowerpot rectangularly. An example of this is found in European patent application 1208739 in the name of Huibert van der Starre.

A building block which is formed in the shape of a truncated pyramid is known from GB-A-2127872. By abutting one another in various ways, various sorts of walkways and rows of flower boxes can be obtained.

A hollow stone for producing vertical walls is known from DE 3406136. The outer circumference of this stone is formed in an undulating manner, this wave shape being such that bordering stones can be placed close together for forming a vertical wall.

Further, FR-A-2428786 discloses an arrangement of construction modules for decoration of gardens or other places, DE 8803849 U discloses a concrete formed block for landscaping and US 3683549 discloses a close flowerpot group having protrusion and recess means to arrange them.

The object of the present invention is to provide a group of flowerpots allowing the space taken up on a transport or other surface to be further optimized over European patent publication 1208739. In addition, it is the object of the present invention to make the apparent contents of the flowerpot in question appear as large as possible. A further object of the present invention is to further simplify the transportation of a group of flowerpots, allowing the number of measures for holding the flowerpots in place during transportation to be limited as much as possible.

This object is achieved, in the group of flower pots described before, with the features of claim 1.

According to the present invention, the flowerpots are formed in a polygonal, such as rectangular manner. One of the sides of the polygon is formed in a curved manner and thereby defines a recess. The opposing side defines a protrusion and the flowerpots are grouped in such a way that the recess of one flowerpot falls into the protrusion of the other flowerpot. As a result, the flowerpots in the group are fixed with respect to one another, thus preventing problems during transportation such as falling-over of the flowerpots. In addition, it has been found that this conveys to the user, in the case of a comparatively compact surface area or volume for each flowerpot, an appearance that suggests a larger surface area than the surface area or volume that is actually taken up or larger contents.

The group which is arranged on a transport face or display face consists of flowerpots which are fixed with respect to one another. That is to say, even when placed on a substantially horizontal bearing face, a stable overall entity is obtained, thus preventing individual flowerpots from falling over during transportation and sale.

The protrusion which falls into the recess can for example be defined by two bordering sides. This applies in particular to a non-claimed variant in which the polygon is a triangle. Two sides of the triangle jointly form the protrusion, the third side being provided with the recess. It is however also possible for the protrusion to be formed by a curvature. The curvature of the protrusion and of the recess can be formed in a mirror image. More particularly, it is possible to provide one side with a wave-shaped curvature, said wave shape being a complete wave, that is to say a wave with a crest and a valley, the protruding part of the wave forming the protrusion and the setback part the recess. By forming a shape of this type in this way in the form of a mirror image on the bordering side of the following flowerpot or the opposing side of the flowerpot in question in the case of a rectangle as the polygon, a "double" interlocking of two bordering flowerpots can be obtained as a result of the fact that an interface contains two recesses and two protrusions which mutually engage. If, in the case of a rectangle, the sides positioned perpendicularly thereto are also formed in this way, a multiple mutual retention of the flowerpots in the group is produced, providing a particularly stable overall entity which is easy to handle. As described above, the appearance of a separate flowerpot from the group is such that the customer believes the volume to be greater than it actually is.

According to a particular embodiment, of the present invention, the height of said wave is at least 10 % of the distance of two opposing sides of the flowerpot.

According to a preferred embodiment of the present invention, two bordering flowerpots can be fixed with respect to each other in the optimum interlocked position in just one way.

According to another advantageous embodiment of the invention, the wave consists of a wave part, that is to say preferably merely a valley or a crest. It is also possible to arrange more than one wave, for example one and a half complete waves, on one side.

In the non-claimed variant in which the polygon comprises a triangle, it is possible for the right side of one triangle, which forms the upper delimitation of one flowerpot, to rest against the other right side of another, bordering flowerpot.

According to a further advantageous embodiment of the invention, the recesses and the associated protrusions are formed as stepped parts. Each part of the step can in turn comprise a wave shape. In this case, the wave can be formed in any desired manner such as sinusoidally. According to a further advantageous embodiment, the arrangement of the curvature on one side is symmetrical with respect to the centre of said side. As a result of the presence of for example two outwardly directed curvatures, which may for example be wave-shaped, a recess is delimited between said two wave parts.

It will be understood that the invention is not limited to flowerpots but can in principle be used for any sort of packaging. In addition, the flowerpot can comprise both an inner pot and an outer pot. The flowerpot is preferably made of a plastics material.

The invention will be explained hereinafter in greater detail based on a number of exemplary embodiments illustrated in the drawings, in which:
Fig. 1 is a schematic perspective view of a flowerpot according to a first non-claimed variant useful for the understanding of the invention;
Fig. 2 is a plan view of a group of flowerpots according to Fig. 1;
Fig. 3 is a plan view of the flowerpot according to Fig. 1;
Fig. 4 is a plan view of a second non-claimed variant of a group of flowerpots useful for the understanding of the invention;
Fig. 5 is a plan view of a third variant of a group of flowerpots, but not according to the invention;
Fig. 6 shows a detail from the plan view according to Fig. 5;
Fig. 7 shows a fourth non-claimed variant useful for the understanding of the invention; and
Fig. 8 shows a fifth non-claimed variant useful for the understanding of the invention.

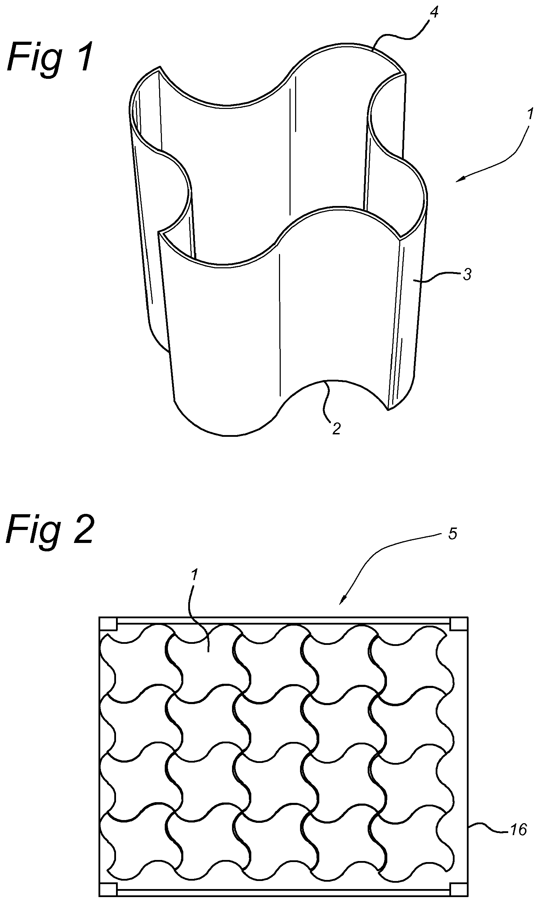

Fig. 1 shows a flowerpot denoted in its entirety by reference numeral 1. The flowerpot consists of a bottom part 2, a wall part 3 and an upper edge 4. According to the present invention, that part having the largest cross section, in this case the upper edge 4, is particularly important. When a group of flowerpots 1 are placed together, this upper edge will define the surface area which is taken up by a group of flowerpots. The bottom part and the wall part can be formed in any conceivable manner. Thus, it is possible to extend the wave shape shown in Fig. 1 of the upper edge into the wall and into the bottom 3. However, it is also possible to have the wave shape gradually run out in the wall, thus producing for example a round, ellipse-shaped, triangular or rectangular bottom 2. According to the present invention, all conceivable variants of the part under the upper edge 4 of the flowerpot are possible.

Plants which may be present in the flowerpot are not shown. This description will assume that the flowerpots are grouped in as compact a manner as possible during transportation and/or storage and/or placement on the shelf without possibly damaging plants contained in each flowerpot.

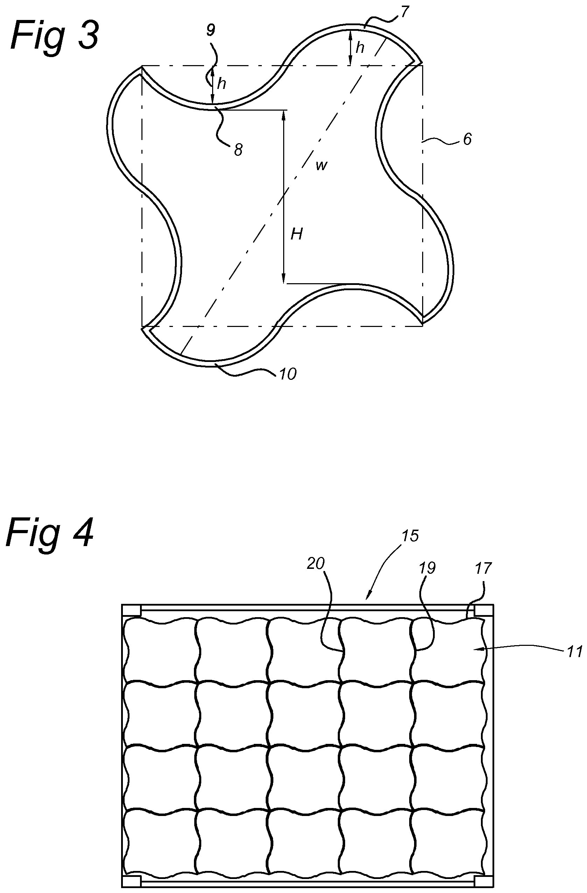

Fig. 2 shows a group of flowerpots 1 that is denoted in its entirety by reference numeral useful for the understanding of present invention. For the sake of clarity, the plants contained therein are not shown. Reference numeral 16 denotes the rectangle within which the flowerpots are accommodated. In combination with Figures 1 and 3, it may be seen that each flowerpot 1, and more particularly the upper edge 4 thereof, consists of an imaginary square 6 around which a wave is arranged. The wave for each side consists of the wave parts 7 and 8, the wave part 8 defining a recess 9 and the wave part 7 a protrusion 10. The recesses 9 and protrusions 10 are arranged, as is clearly apparent from Fig. 2, in such a way as to allow interacting flowerpots 1 to be slid together in a compact manner, thus producing a stabler overall entity which is easy to handle and to transport. In this case, local space may be left between flowerpots placed one against another, for example for receiving a protrusion such as a carrier handle. When grouped together, each flowerpot appears larger than it actually is.

As a result of the mutual positioning in the manner shown in Fig. 2, the flowerpots are secured with respect to one another and falling-over can be prevented during transportation and/or when displayed at a sales outlet.

Fig. 3 is a plan view of the flowerpot used in the group from Fig. 2. The height of the "wave" is denoted by h while the distance between opposing sides is denoted by H.

According to the present invention, h is at least 10 % of H. When the consumer looks at a flowerpot of this type, the effect of a comparatively deep and wide pot will be obtained in the direction of perception w, the actual volume of the pot being less as a result of the selected shape. That is to say, visually, the pot appears larger than the actual contents thereof. This means that a comparatively large number of pots can be placed together in a comparatively small space.

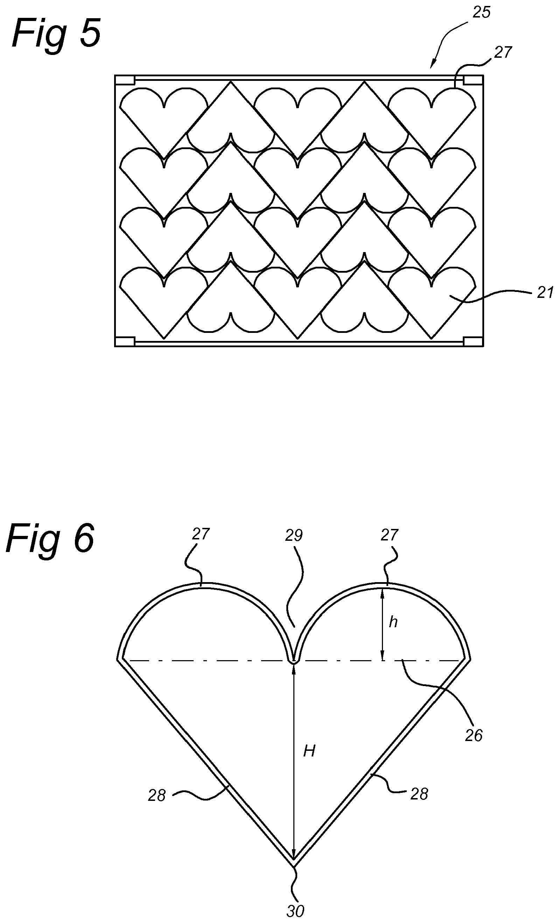

Fig. 4 is a plan view of a non-claimed variant useful for the understanding of the invention described hereinbefore of a flowerpot. The remaining particulars of the flowerpots with regard to the wall and the bottom are in principle the same as in the foregoing variant. It may be seen from Fig. 4 that the flowerpots 11 which are used there and are combined to form a group 15 are also shaped starting from an imaginary square, the wave arranged thereon comprising about one and a half complete waves. In this non-claimed variant too, a particularly compact surface can be obtained by placing the flowerpots against one another. Fig. 5 illustrates a further variant but outside of the claimed invention. In this case, the flowerpots are in principle triangular,
as may be seen from Fig. 6, and denoted in their entirety by reference numeral 21. Reference numeral 26 represents an imaginary line defining the triangular shape. Starting from this triangular shape, two wave parts 27, between which a recess 29 is delimited, are arranged on the side 26. The bordering sides 28 of the triangle define a protrusion 30. As may be seen from Fig. 5, the protrusion 30 falls into the recess 29 and produces in this manner a particularly stable overall entity. The indications h and H are also introduced in Fig. 6.

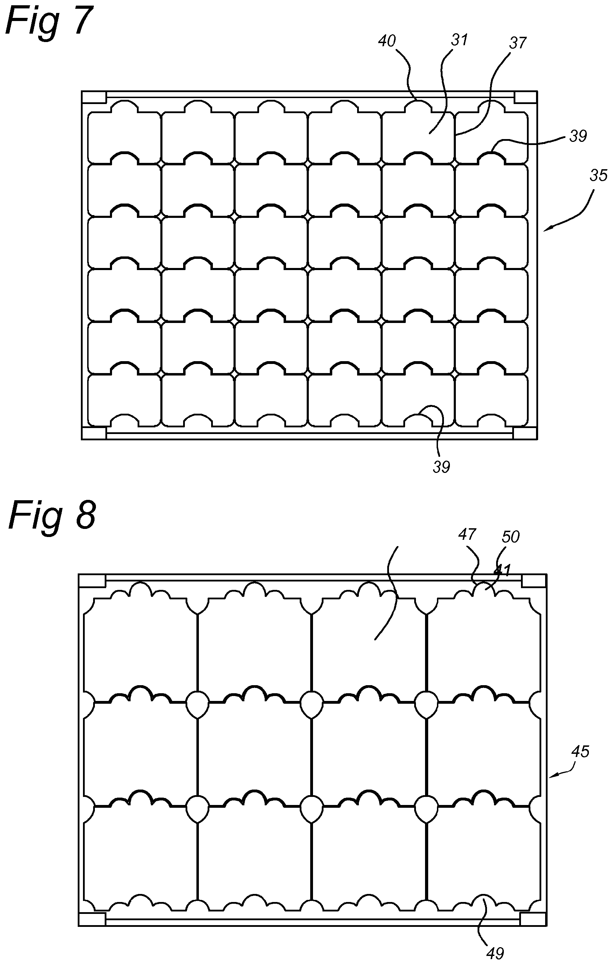

Fig. 7 illustrates a variant, the basic shape of the upper edge of the pot being substantially rectangular. In this case, a protrusion 40, which is formed as a wave part, protrudes from one side of the rectangle. A recess 39 is formed in the opposing side of the flowerpot. In this example, just two opposing sides of the wave shape or curvature according to the present invention are provided, while the other two opposing sides are not provided with a recess/protrusion of this type. It will be understood that it is also possible to arrange a shape of this type in the other sides. The same applies to the variant shown in Fig. 2, which forms the embodiment of the invention with two opposing sides in a straight manner and the other two opposing sides in the shown manner of the wave shape.

A further non-claimed variant is shown in Fig. 8, the curvature being formed in a stepped manner. The flowerpots are denoted by reference numeral 41 and combined to form a group 45. The protrusion consists of various protruding parts 50 which are in all cases constructed from a wave 47. The same applies to the recess 49. In this case too, the sides shown on the left and/or right can also be provided with any conceivable protrusions/recess shape, that is to say the shape as shown in Fig. 8 for the two opposing sides or one of the wave shapes shown previously.

On reading the foregoing description, the person skilled in the art will immediately think of a large number of variants which lie within the scope of protection of the appended claims.

## Claims

1. Group (5, 15, 35, 45) of flowerpots (1, 11, 31, 41), which are grouped in plural rows and columns in a compact manner to form a rectangle (16) when viewed from above, wherein each flowerpot (1, 11, 31, 41) comprises a bottom part (2), an adjoining wall part (3) and an upper edge (4), the upper edge of each of said flower pots having the same shape when viewed from above, the upper edge (4) having a polygonal shape when viewed from above, said polygon comprising a rectangle, **characterized in that** two opposing sides of the polygon are formed in a straight manner, and the other two opposing sides being curved, which curvature comprises a complete wave and defines a recess (9, 19, 39, 49), and the opposing side of the flowerpot defining a protrusion (10, 20, 40, 50) and said flowerpots (1, 11, 31, 41) being arranged in said group in such a way that a protrusion (10, 20, 40, 50) of one flowerpot falls into the recess (9, 19, 39, 49) of another flowerpot in such a way that said flowerpots are fixed with respect to one another in said group by said protrusions and said recesses.

2. Group according to any of the preceding claims, wherein said curvature comprises about one and a half complete wave.

3. Group according to any of the preceding claims, wherein a wave part extends from the end delimitation of a side to the centre of a side.

4. Group according to any of the preceding claims, wherein the wave shape of the upper edge extends into the wall.

5. Group according to any of the preceding claims, wherein the arrangement of the curvature on one side is symmetrical with respect to the centre of said side.

6. Group according to any of the preceding claims, wherein said recess (49) comprises a stepped part.

7. Group according to any of the preceding claims, wherein said flowerpots are made of plastics material.

8. Group according to any of the preceding claims, wherein said curvature has a deviation (h) with respect to the base line of the wall part in which this is shaped, which deviation h comprises at least 10 % of the distance (H) from the wall part positioned opposite.

9. Group according to any of the preceding claims, arranged on a substantially horizontal bearing face.

10. Group according to any of the preceding claims, wherein that bearing face comprises a transport face or display face.

## Patentansprüche

1. Gruppe (5, 15, 35, 45) von Blumentöpfen (1, 11, 31, 41), die in mehreren Zeilen und Spalten kompakt gruppiert sind, um, von oben betrachtet, ein Rechteck (16) zu bilden, wobei jeder Blumentopf (1, 11, 31, 41) ein Bodenteil (2), ein angrenzendes Wandteil (3) und eine Oberkante (4) aufweist, wobei die Oberkante jedes der Blumentöpfe, von oben betrachtet, die gleiche Form hat, die Oberkante (4), von oben betrachtet, eine Polygonform hat, das Polygon ein Rechteck aufweist, **dadurch gekennzeichnet, dass** zwei gegenüberliegende Seiten des Polygons gerade ausgebildet sind und die beiden anderen gegenüberliegenden Seiten gekrümmt sind, wobei die Krümmung eine vollständige Welle aufweist und eine Vertiefung (9, 19, 39, 49) festlegt, und die gegenüberliegende Seite des Blumentopfs eine Vorwölbung (10, 20, 40, 50) festlegt und die Blumentöpfe (1, 11, 31, 41) in der Gruppe so angeordnet sind, dass eine Vorwölbung (10, 20, 40, 50) eines Blumentopfs in die Vertiefung (9, 19, 39, 49) eines anderen Blumentopfs so fällt, dass die Blumentöpfe in der Gruppe durch die Vorwölbungen und die Vertiefungen im Hinblick aufeinander fixiert sind.

2. Gruppe nach einem der vorstehenden Ansprüche, wobei die Krümmung eine etwa eineinhalbfache vollständige Welle aufweist.

3. Gruppe nach einem der vorstehenden Ansprüche, wobei sich ein Wellenteil von der Endbegrenzung einer Seite zur Mitte einer Seite erstreckt.

4. Gruppe nach einem der vorstehenden Ansprüche, wobei sich die Wellenform der Oberkante in die Wand erstreckt.

5. Gruppe nach einem der vorstehenden Ansprüche, wobei die Anordnung der Krümmung auf einer Seite im Hinblick auf die Mitte der Seite symmetrisch ist.

6. Gruppe nach einem der vorstehenden Ansprüche, wobei die Vertiefung (49) ein abgestuftes Teil aufweist.

7. Gruppe nach einem der vorstehenden Ansprüche, wobei die Blumentöpfe aus Kunststoffmaterial hergestellt sind.

8. Gruppe nach einem der vorstehenden Ansprüche, wobei die Krümmung eine Abweichung (h) im Hinblick auf die Grundlinie des Wandteils hat, in dem sie geformt ist, wobei die Abweichung h mindestens 10 % des Abstands (H) vom gegenüber positionierten Wandteil aufweist.

9. Gruppe nach einem der vorstehenden Ansprüche, die auf einer im Wesentlichen waagerechten Auflagefläche angeordnet ist.

10. Gruppe nach einem der vorstehenden Ansprüche, wobei die Auflagefläche eine Transportfläche oder Ausstellungsfläche aufweist.

## Revendications

1. Groupe (5, 15, 35, 45) de pots de fleurs (1, 11, 31, 41), qui sont regroupés en plusieurs rangées et colonnes de manière compacte pour former un rectangle (16) en vue de dessus, dans lequel chaque pot de fleurs (1, 11, 31, 41) comprend une partie de fond (2), une partie de paroi attenante (3) et un bord supérieur (4), le bord supérieur de chacun desdits pots de fleurs ayant la même forme en vue de dessus, le bord supérieur (4) ayant une forme polygonale en vue de dessus, ledit polygone comprenant un rectangle, **caractérisé en ce que** deux côtés opposés du polygone sont formés de manière droite, et les deux autres côtés opposés étant incurvés, laquelle courbure comprend une vague complète, et définit un évidement (9, 19, 39, 49), et le côté opposé du pot de fleurs définissant une protubérance (10, 20, 40, 50) et lesdits pots de fleurs (1, 11, 31, 41) étant agencés en ledit groupe de sorte qu'une protubérance (10, 20, 40, 50) d'un pot de fleurs s'inscrive dans l'évidement (9, 19, 39, 49) d'un autre pot de fleurs si bien que lesdits pots de fleurs sont fixes les uns par rapport aux autres dans ledit groupe par lesdites protubérances et lesdits évidements.

2. Groupe selon l'une quelconque des revendications précédentes, dans lequel ladite courbure comprend environ une vague complète et demi.

3. Groupe selon l'une quelconque des revendications précédentes, dans lequel une partie de vague s'étend à partir de la délimitation d'extrémité d'un côté jusqu'au centre d'un côté.

4. Groupe selon l'une quelconque des revendications précédentes, dans lequel la forme de vague du bord supérieur s'étend dans la paroi.

5. Groupe selon l'une quelconque des revendications précédentes, dans lequel l'agencement de la courbure sur un côté est symétrique par rapport au centre dudit côté.

6. Groupe selon l'une quelconque des revendications précédentes, dans lequel ledit évidement (49) comprend une partie étagée.

7. Groupe selon l'une quelconque des revendications précédentes, dans lequel lesdits pots de fleurs sont faits de matière plastique.

8. Groupe selon l'une quelconque des revendications précédentes, dans lequel ladite courbure présente un écart (h) par rapport à la ligne de base de la partie de paroi dans laquelle elle est formée, lequel écart (h) comprend au moins 10 % de la distance (H) à partir de la partie de paroi positionnée à l'opposé.

9. Groupe selon l'une quelconque des revendications précédentes, agencé sur une face d'appui sensiblement horizontale.

10. Groupe selon l'une quelconque des revendications précédentes, dans lequel cette face d'appui comprend une face de transport ou une face d'affichage.
